# EUROPÄISCHE PATENTSCHRIFT

(11) **EP 3 047 987 B1**
(45) Veröffentlichungstag und Bekanntmachung des Hinweises auf die Patenterteilung: **26.06.2019**
(21) Anmeldenummer: 15003588.9
(22) Anmeldetag: 16.12.2015
(51) Int. Cl.: B60G 17/018, B60G 17/016, B62D 35/00

(54) **VERFAHREN UND VORRICHTUNG ZUR NIVEAUREGELUNG EINES GEFEDERTEN FAHRZEUGAUFBAUS**
METHOD AND DEVICE FOR LEVEL ADJUSTMENT OF A PNEUMATICALLY SPRUNG VEHICLE BODY
PROCEDE ET DISPOSITIF DE REGLAGE DE NIVEAU D'UNE CAISSE DE VEHICULE SUR RESSORTS

(30) Priorität: 21.01.2015 DE 102015000718
(43) Veröffentlichungstag der Anmeldung: 27.07.2016
(73) Patentinhaber: MAN Truck & Bus AG, 80995 München (DE)
(72) Erfinder: Grimm, Thomas, 80339 München (DE); Pflanz, Tassilo, 86899 Landsberg am Lech (DE)
(74) Vertreter: v. Bezold & Partner Patentanwälte - PartG mbB

(56) Entgegenhaltungen:
- DE-A1-102008 052 134
- DE-A1-102013 009 204
- DE-A1-102013 210 553
- US-A1- 2014 095 023
- US-A1- 2014 379 214

## Beschreibung

Die Erfindung betrifft ein Verfahren zur Steuerung der Niveauregulierung eines Fahrzeugaufbaus eines Kraftfahrzeugs mit den im Oberbegriff des Patentanspruchs 1 genannten Merkmalen. Die Erfindung betrifft ferner eine entsprechende Vorrichtung zur Niveauregelung eines gefederten Fahrzeugaufbaus relativ zu einer Radaufhängung.

Die Räder eines Fahrzeugs werden üblicherweise über jeweils ein Feder-Dämpfungselement direkt oder indirekt mit dem Fahrzeugaufbau verbunden, um hierdurch eine Federung des Fahrzeugs und somit ein sicheres und komfortables Fahrverhalten zu gewährleisten. Aus dem Stand der Technik ist es allgemein bekannt, Kraftfahrzeuge mit einer Niveauregeleinrichtung zu versehen. Die Höhenänderung des Fahrzeugaufbaus gegenüber den Rädern erfolgt dabei durch ein Regelverfahren, mit dem die Luftmenge im Luftfedersystem des Fahrzeugs geändert wird. Bei Unter- oder Überschreitung eines vorgegebenen Höhenniveaus wird durch ein Regelsystem ein Höhenänderungsvorgang eingeleitet. Dabei wird bei Unterschreitung eines vorgegebenen Höhenniveaus dem Luftfedersystem regelbar ein Druckmittel zugeführt, und bei Überschreitung eines vorgegebenen Höhenniveaus wird aus dem Luftfedersystem regelbar ein Druckmittel zur Absenkung des Fahrzeugaufbaus abgelassen.

Ferner sind gattungsgemäße Verfahren und Vorrichtungen zur Regulierung des Fahrzeugniveaus, bei denen die Höhenänderung des Fahrzeugaufbaus auf einen variabel vorgebbaren Niveausollwert eingeregelt werden kann, in der Praxis hinlänglich bekannt.

So ist aus der EP 0 318 013 A2 ein Niveauregelsystem für ein Fahrzeug mit einem Sensor zur Überwachung der Höhe des Fahrzeugaufbaus und einer Steuereinrichtung zur Festsetzung eines Zielhöhenbereiches des Fahrzeugs bekannt, wobei Längs-, Quer- und Vertikalbeschleunigungen überwacht und der Zielhöhenbereich entsprechend einer dieser Beschleunigungen eingestellt wird.

Die Offenlegungsschrift EP 0 530 755 A1 offenbart ein weiteres Niveauregelsystem für Kraftfahrzeuge mit einer Regelschaltung, die in Abhängigkeit von einem Sollwert und einem Istwert der Aufbauhöhe unter Berücksichtigung einer zulässigen Abweichung zwischen Soll- und Istwert Ventilsteuersignale zur Regelung des Niveaus erzeugt. Des Weiteren umfasst das Niveauregelsystem einen die Änderungen der Längs- und der Querbeschleunigung des Fahrzeugaufbaus auswertenden Schaltkreis, dessen Ausgangssignal den Sollwert der Aufbauhöhe verschiebt, wenn die Querbeschleunigung einen Schwellenwert überschreitet.

Aus der DE 10 2013 009 204 A1 ist ein System zur Niveauregelung eines Fahrerhauses eines Nutzfahrzeugs gegenüber einem Fahrzeugchassis sowie ein entsprechendes Betriebsverfahren bekannt. Das System umfasst eine gefederte Lagerung, um das Fahrerhaus federnd auf dem Fahrzeugchassis zu lagern. Dabei ist die gefederte Lagerung auf mindestens zwei unterschiedliche Höhenpositionen in Abhängigkeit zumindest eines Parameters betreffend eine Fahrstrecke und/oder einen Fahrzeugzustand einstellbar. Aus der DE 10 2008 052 134 A1 ist ein Verfahren zur Verbesserung des Fahrverhaltens des Kraftfahrzeugs bekannt, aufweisend mindestens ein aktives Fahrwerkselement, das eine Karosserie gegenüber mindestens einem Rad abstützt. Hierbei wird eine Kategorie des Verkehrswegs ermittelt, die eine Art und/oder einen Zustand des Verkehrswegs charakterisiert und wobei das Fahrwerkselement in Abhängigkeit von der ermittelten Kategorie beeinflusst wird.

Ein weiteres gattungsgemäßes Verfahren zur Niveauregelung eines pneumatisch gefederten Fahrzeugs ist aus der EP 1 925 471 B1 bekannt. Bei diesem Verfahren werden Niveauwerte des Fahrzeugaufbaus ermittelt und durch Ansteuerung von Luftbälgen innerhalb von Sollniveau-Toleranzgrenzen geregelt, wobei eine Querbeschleunigung des Fahrzeugs ermittelt wird und die Sollniveau-Toleranzgrenzen in Abhängigkeit von der ermittelten Querbeschleunigung festgesetzt werden, wobei an der kurveninneren Fahrzeugseite und der kurvenäußeren Fahrzeugseite unterschiedliche Sollniveau-Toleranzgrenzen festgesetzt werden und an der kurveninneren Seite die obere Sollniveau-Toleranzgrenze weiter nach oben festgesetzt wird als an der kurvenäußeren Seite und/oder an der kurvenäußeren Seite die untere Sollniveau-Toleranzgrenze tiefer als an der kurveninneren Seite festgesetzt wird.

Die vorgenannten gattungsgemäßen Ansätze aus dem Stand der Technik haben gemeinsam, dass der jeweils aktuelle Wert der variabel vorgebbaren Niveausollhöhe, auf die der Abstand zwischen Fahrzeugaufbau und Radaufhängung eingeregelt wird, anhand aktueller Beschleunigungswerte des Fahrzeugaufbaus, wie z. B. der Längs- oder Querbeschleunigung des Fahrzeugaufbaus, bestimmt wird, die ein Maß für den aktuellen Fahrbahnzustand oder die aktuelle Fahrbahnbeschaffenheit sind.

Ein Nachteil der bekannten Ansätze ist, dass damit eine Anpassung der Niveausollhöhe erst möglich ist, nachdem eine Verschlechterung oder Verbesserung der Fahrbahnbeschaffenheit bereits eingetreten ist, was aus Sicherheits-, Komfort- und Kraftstoffverbrauchsgesichtspunkten nachteilig ist. Ferner ist eine entsprechende Sensorik zur Bestimmung der Beschleunigungswerte notwendig.

Es ist somit eine Aufgabe der Erfindung, ein verbessertes Verfahren zur Niveauregelung eines gefederten Fahrzeugaufbaus relativ zu einer Radaufhängung, bei dem Abstandswerte zwischen dem Fahrzeugaufbau und der Radaufhängung ermittelt und durch Ansteuerung von einem Federsystem auf einen variabel vorgebbaren Niveausollwert eingeregelt werden, bereitzustellen, mit dem Nachteile herkömmlicher Techniken vermieden werden können. Die Aufgabe der Erfindung ist es insbesondere, ein derartiges Verfahren zur Niveauregelung bereitzustellen, das den Kraftstoffverbrauch verringert. Eine weitere Aufgabe ist es, eine entsprechende Vorrichtung zur Niveauregelung eines gefederten Fahrzeugaufbaus relativ zu einer Radaufhängung bereitzustellen, mit der Nachteile herkömmlicher Vorrichtungen vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Erfindungsgemäß wird ein Verfahren zur Niveauregelung eines gefederten, insbesondere eines pneumatisch gefederten, Fahrzeugaufbaus relativ zu einer Radaufhängung bereitgestellt, bei dem Abstandswerte zwischen dem Fahrzeugaufbau und der Radaufhängung ermittelt und durch Ansteuerung von einem Federsystem auf einen variabel vorgebbaren Niveausollwert eingeregelt werden. Der jeweils vorgegebene Niveausollwert, der den einzuregelnden Sollabstand zwischen Fahrzeugaufbau und der Radaufhängung angibt, ist somit nicht fix, sondern kann verändert werden.

Gemäß allgemeinen Gesichtspunkten der Erfindung werden in Abhängigkeit von einer Fahrzeugposition und von Straßenkartendaten ein aktueller Straßentyp ermittelt und der Niveausollwert in Abhängigkeit von dem ermittelten Straßentyp festgelegt. Mit anderen Worten erfolgt somit die Erkennung, welches Fahrzeugniveau einstellbar ist, automatisch in Abhängigkeit von der Fahrzeugposition, z. B. mittels GPS-Daten, und von Straßenkartendaten, die zur Bestimmung eines aktuellen Straßentyps verwendet werden, d. h. einem Straßentyp, auf dem das Fahrzeug aktuell fährt oder auf dem das Fahrzeug unmittelbar fahren wird.

Gemäß einer bevorzugten Ausgestaltungsform wird der Niveausollwert herabgesetzt, wenn der aktuelle Straßentyp als eine Autobahn ermittelt wurde. Beispielsweise kann anhand der Positionsdaten und der Straßenkartendaten jeweils fortlaufend oder regelmäßig ermittelt werden, auf welchem Straßentyp das Fahrzeug gerade fährt und/oder wann sich der Straßentyp entlang der Fahrstrecke jeweils ändert. Eine Verringerung des Niveausollwerts reduziert den Luftwiderstand des Fahrzeugs, der überwunden und von der Antriebsleistung aufgebracht werden muss, und folglich auch den Kraftstoffverbrauch des Kraftfahrzeugs. Autobahnen zeichnen sich in der Regel durch eine gute Fahrbahnbeschaffenheit aus und ermöglichen daher aus Sicherheits- und Komfortgesichtspunkten einen verringerten Niveausollwert im Vergleich zu Straßen in Wohngebieten oder im Vergleich zu nicht befestigten Straßen. Auf Autobahnen ist ferner die durchschnittliche Fahrgeschwindigkeit höher als auf anderen Straßentypen, so dass eine Verringerung des Niveausollwerts für diese Straßentypen eine besonders große Reduzierung des Kraftstoffverbrauchs ermöglicht.

Gemäß einer weiteren Variante kann der Niveausollwert von einem höheren auf einen niedrigeren Wert herabgesetzt werden, wenn anhand der Straßenkartendaten und der Positionsdaten des Fahrzeugs festgestellt wird, dass der aktuelle Straßentyp eine Straße mit guter Fahrbahnbeschaffenheit ist und/oder eine Straße, auf der die erlaubte Höchstgeschwindigkeit größer als ein vorgegebener Schwellenwert ist, beispielsweise eine Autobahn, eine Fernstraße und/oder eine Überlandstraße.

Wenn der aktuelle Straßentyp keine Straße mit guter Fahrbahnbeschaffenheit ist und/oder keine Straße, auf der die erlaubte Höchstgeschwindigkeit größer als ein vorgegebener Schwellenwert ist, und/oder der aktuelle Straßentyp nicht mehr eine Autobahn, eine Fernstraße und/oder eine Überlandstraße ist, wird die Herabsetzung des Niveausollwerts wieder rückgängig gemacht.

Eine Möglichkeit der erfindungsgemäßen Realisierung sieht vor, dass der Niveausollwert jeweils auf einen von zwei vorgegebenen unterschiedlichen Niveausollwerten eingestellt wird. Ferner besteht die Möglichkeit, mehr als zwei unterschiedliche Niveausollwerte vorzugeben, die in Abhängigkeit von dem aktuellen Straßentyp vorgegeben werden.

Gemäß einer weiteren Variante wird eine manuelle Eingabemöglichkeit bereitgestellt, über die ein Fahrzeugfahrer den Niveausollwert manuell einstellen kann, wodurch der in Abhängigkeit von dem ermittelten Straßentyp automatisch festgesetzte Niveausollwert außer Kraft gesetzt wird. Dies bedeutet, dass der Fahrer mittels der manuellen Eingabemöglichkeit den automatisch in Abhängigkeit von dem aktuellen Straßentyp festgesetzten Niveausollwert deaktivieren und verändern kann, falls z. B. aufgrund aktueller Gegebenheiten wie Schlaglöcher, Bodenwellen etc. die Bodenfreiheit angepasst werden sollte. Dies bietet den Vorteil, dass in der Regel, ohne dass sich der Fahrer darum kümmern muss, automatisch ein straßentypabhängiger Niveausollwert vorgeben wird, der Fahrer diese automatische Einstellung jedoch korrigieren kann, z. B. falls eine Autobahn eine vergleichsweise schlechte Fahrbahnbeschaffenheit aufweist, die einen höheren Niveausollwert aus Sicherheits- und/oder Komfortgesichtspunkten erforderlich macht.

Hierbei können gemäß einem weiteren Aspekt der Erfindung die manuell getätigten Niveausollwerteinstellungen des Fahrers zusammen mit den entsprechenden Positionsdaten der Fahrzeugposition, an der die manuellen Niveausollwerteinstellungen getätigt wurden, gespeichert werden. Dies bietet den Vorteil, dass das Verfahren bzw. die entsprechend ausgebildete Vorrichtung lernen kann, wo der Fahrer die automatische Vorgabe des Niveausollwerts korrigiert hat, so dass dies bei zukünftigen Fahrten berücksichtigen werden kann, wenn z. B. das Fahrzeug erneut die entsprechenden Stelle passiert.

Hierzu kann der Niveausollwert in Abhängigkeit von den gespeicherten Niveausollwerteinstellungen des Fahrers vorgeben werden, wobei durch einen Vergleich einer aktuellen Fahrzeugposition mit den für die manuellen Niveausollwerteinstellungen gespeicherten Positionsdaten ermittelt wird, ob für die aktuelle Fahrzeugposition und/oder Straße gespeicherte manuelle Niveausollwerteinstellungen vorliegen, und falls ja, wird der Niveausollwert automatisch gemäß der entsprechenden gespeicherten manuellen Niveausollwerteinstellung festgelegt. Diese Festlegung hat dann Vorrang gegenüber der Festlegung in Abhängigkeit von dem aktuellen Straßentyp.

Gemäß einer weiteren Variante besteht die Möglichkeit, die manuellen Niveausollwerteinstellungen und die entsprechenden Positionsdaten an eine fahrzeugexterne Datenbank, vorzugsweise eine Internetdatenbank, zu übermitteln. Dies bietet den Vorteil, dass andere Fahrzeuge auf diese manuell getätigten Niveausollwerteinstellungen zugreifen können und für die Niveauregelung des gefederten Fahrzeugaufbaus verwenden können.

Beispielsweise können Daten, die von anderen Fahrern auf einer bestimmten Straße oder an einer bestimmte Position getätigte manuelle Niveausollwerteinstellungen angeben, von einer fahrzeugexternen Datenbank bereitgestellt und vom Kraftfahrzeug im Fahrbetrieb empfangen werden. Falls für eine aktuelle Fahrposition keine eigene gespeicherte manuelle Niveausollwerteinstellung vorliegt und falls aus den von der fahrzeugexternen Datenbank empfangenen Daten ableitbar ist, dass ein anderer Fahrer an der aktuellen Fahrposition eine manuelle Niveausollwerteinstellung getätigt hat, dann erfolgt ein automatisches Festlegen des Niveausollwerts gemäß der empfangenen Niveausollwerteinstellung für die aktuelle Fahrposition. Gemäß dieser Ausführungsvariante werden zur automatischen Vorgabe des aktuellen Niveausollwerts somit zuerst eigene gespeicherte Daten über vom Fahrer zuvor getätigte Niveausollwerteinstellungen herangezogen, und wenn für die aktuelle Fahrposition keine entsprechenden relevanten Daten verfügbar sind, dann wird geprüft, ob für die aktuelle Fahrposition entsprechende fahrzeugextern bereitgestellte Daten anderer Fahrer verfügbar sind, und diese, falls verfügbar, zur Festlegung des aktuellen Niveausollwerts verwendet. Wenn derartige fahrzeugexterne Daten nicht verfügbar sind, dann wird der Niveausollwert in Abhängigkeit von dem bestimmten aktuellen Straßentyp, wie zuvor beschrieben, festgelegt.

Erfindungsgemäß wird ferner ein im Bodenbereich an der Frontseite des Kraftfahrzeugs angeordnetes aerodynamisches Flächenelement zur Reduzierung von Luftverwirbelungen an der Fahrzeugunterseite ausgefahren, wenn der Niveausollwert herabgesetzt wird. Dadurch kann der Kraftstoffverbrauch weiter reduziert werden.

Gemäß einem weiteren Gesichtspunkt der Erfindung wird eine Vorrichtung zur Niveauregelung eines gefederten Fahrzeugaufbaus relativ zu einer Radaufhängung bereitgestellt, die ausgeführt ist, das Verfahren, wie vorstehend beschrieben, auszuführen. Insbesondere ist die Vorrichtung ausgebildet, Abstandswerte zwischen dem Fahrzeugaufbau und der Radaufhängung zu ermitteln und durch Ansteuerung von einem Federsystem auf einen variabel vorgebbaren Niveausollwert einzuregeln. Hierbei ist die Vorrichtung ausgebildet, in Abhängigkeit von einer Fahrzeugposition und Straßenkartendaten einen aktuellen Straßentyp zu ermitteln und den Niveausollwert in Abhängigkeit von dem ermittelten Straßentyp automatisch festzulegen.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Festlegung des Niveausollwerts, gelten somit auch für die Vorrichtung.

Die Erfindung betrifft ferner ein Kraftfahrzeug, insbesondere ein Nutzfahrzeug, mit einer Vorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Ablaufdiagram zur Illustration der variablen Vorgabe eines Sollwerts für die Niveauregelung eines gefederten Fahrzeugaufbaus gemäß einer Ausführungsform der Erfindung;
- Figur 2A: ein Nutzfahrzeug, dessen Niveausollwert gemäß einer Ausführungsform der Erfindung auf einen ersten Wert festgelegt ist; und
- Figur 2B: ein Nutzfahrzeug, dessen Niveausollwert gemäß einer Ausführungsform der Erfindung auf einen zweiten, niedrigeren Wert festgelegt ist.

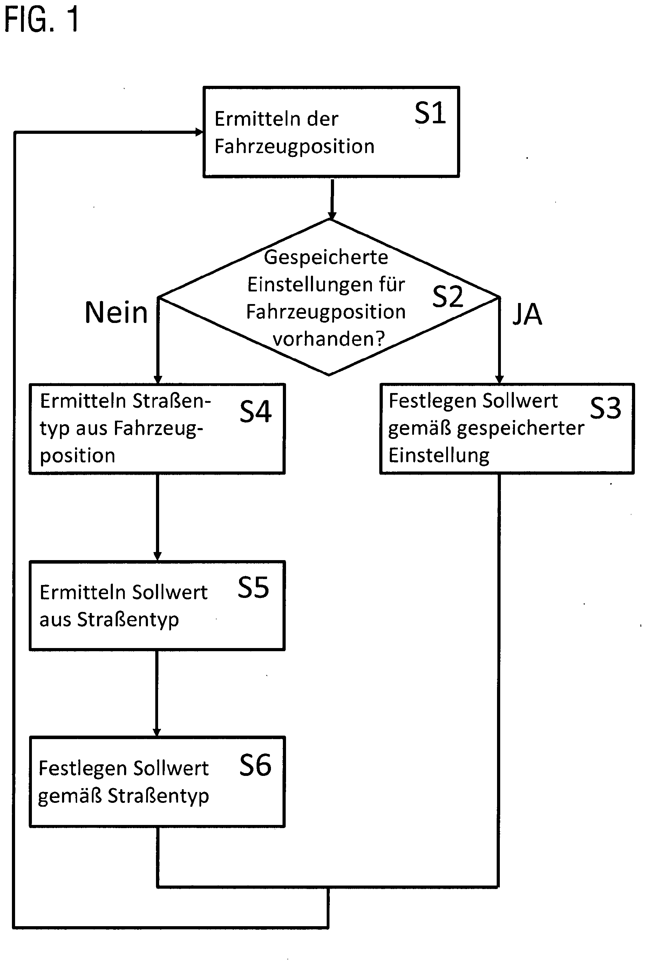

Figur 1 zeigt ein Ablaufdiagram zur Illustration der variablen Vorgabe eines Sollwerts für die Niveauregelung eines gefederten Fahrzeugaufbaus gemäß einer Ausführungsform der Erfindung. In Schritt S1 wird in an sich bekannter Weise fortlaufend die aktuelle Fahrzeugposition, beispielsweise anhand von empfangen GPS-Daten, ermittelt. Hierbei wird basierend auf GPS-Daten und Straßenkartendaten die aktuelle Straße ermittelt, auf der sich das Fahrzeug gerade befindet. Ferner wird für das Fahrzeug die aktuelle Position und/oder der aktuelle Streckenabschnitt auf dieser Straße ermittelt.

In Schritt S2 wird anschließend geprüft, ob für die aktuelle Fahrzeugposition gespeicherte, vom Fahrer manuell getätigte Niveausollwerteinstellungen verfügbar sind. Hierfür wird durch Zugriff auf eine Speichereinrichtung geprüft, ob in dieser manuell getätigte Niveausollwerteinstellungen des Fahrers gespeichert sind, deren zugeordnete Positionsdaten mit den aktuellen Positionsdaten innerhalb vorbestimmter Grenzen übereinstimmen.

Vorstehend wurde bereits erwähnt, dass der Fahrzeugfahrer den Niveausollwert für die Niveauregelung auch manuell einstellen kann, wodurch der in Abhängigkeit von dem ermittelten Straßentyp automatisch festgesetzte Niveausollwert (Schritte S4 bis S6) außer Kraft gesetzt wird. Die von dem Fahrer im Fahrbetrieb manuell festgelegten Niveausollwerte werden jeweils mit den entsprechenden Positionsdaten gespeichert, damit auf diese Daten später zugegriffen werden kann.

In Schritt S2 wird somit geprüft, ob für die in Schritt S1 ermittelte Fahrzeugposition gespeicherte manuell getätigte Niveausollwerteinstellungen vorhanden sind. Dies ist beispielsweise der Fall, wenn der Fahrer auf der gleichen Straße, auf der sich das Fahrzeug aktuell befindet, und an einer Stelle, die weniger als ein vorbestimmter Schwellenwert von der aktuellen Fahrzeugposition entfernt liegt, eine manuelle Niveausollwerteinstellungen vorgenommen hat. Ist dies der Fall, wird das Verfahren mit Schritt S3 fortgesetzt. In Schritt S3 wird der Sollwert gemäß der gespeicherten früheren manuell getätigten Niveausollwerteinstellungen festgelegt. Ergibt sich aus den gespeicherten Niveausollwerteinstellungen beispielsweise, dass der Fahrer bei einer früheren Fahrt an der aktuellen Fahrzeugposition den Niveausollwert heraufgesetzt hat, beispielsweise aufgrund von Schlaglöchern oder Bodenwellen, wird der Niveausollwert auf diesem Wert gehalten oder auf diesen Wert heraufgesetzt, falls er aktuell herabgesetzt ist.

Sind für die aktuelle Fahrzeugposition keine Niveausollwerteinstellungen gespeichert, die bei früheren Fahrten vom Fahrer manuell getätigt wurden, dann wird das Verfahren mit Schritt S4 fortgesetzt.

In Schritt S4 wird in Abhängigkeit von Straßenkartendaten und der in Schritt S1 bestimmten aktuellen Fahrzeugposition ein aktueller Straßentyp ermittelt. Der aktuelle Straßentyp gibt an, auf welcher Art von Straße (Autobahn, Überlandstraße, Landstraße, Ortsstraße, nicht befestigte Straße etc.) sich das Fahrzeug aktuell befindet.

In Schritt S5 wird anschließend in Abhängigkeit von dem ermittelten Straßentyp der Sollwert für die Niveauregulierung ermittelt. Hierbei kann beispielsweise im Fahrzeug eine Tabelle hinterlegt sein, die jedem Straßentyp einen Niveausollwert zuordnet. Hierbei wird Straßentypen, die in der Regel eine hohe Fahrgeschwindigkeit ermöglichen und eine gute Fahrbahnbeschaffenheit aufweisen, beispielsweise Autobahnen, Überlandstraßen oder Schnellstraßen, ein kleinerer Niveausollwert zugeordnet als anderen Straßentypen, die in der Regel eine schlechtere Fahrbahnbeschaffenheit aufweisen.

In Schritt S6 wird der variable Sollwert für die Niveauregelung somit auf den in Schritt S5 bestimmten Wert festgelegt. Fährt das Fahrzeug beispielsweise auf einer Autobahn, wird in Schritt S6 der Niveausollwert auf den kleineren Wert, der für Autobahnen hinterlegt ist, festgelegt. Dadurch wird das Fahrzeug in seiner Bodenfreiheit und Fahrzeughöhe verringert, wodurch der Luftwiderstand und folglich der Kraftstoffverbrauch des Kraftfahrzeugs sinkt. Auf Autobahnen ist aufgrund der in der Regel guten Fahrbahnbeschaffenheit eine Verringerung der Bodenfreiheit aufgrund des herabgesetzten Niveausollwerts annehmbar.

Nachfolgend erfolgt eine erneute Bestimmung der aktuellen Fahrzeugposition in S1, wodurch sich der Steuerkreis zur Anpassung des Niveausollwerts schließt.

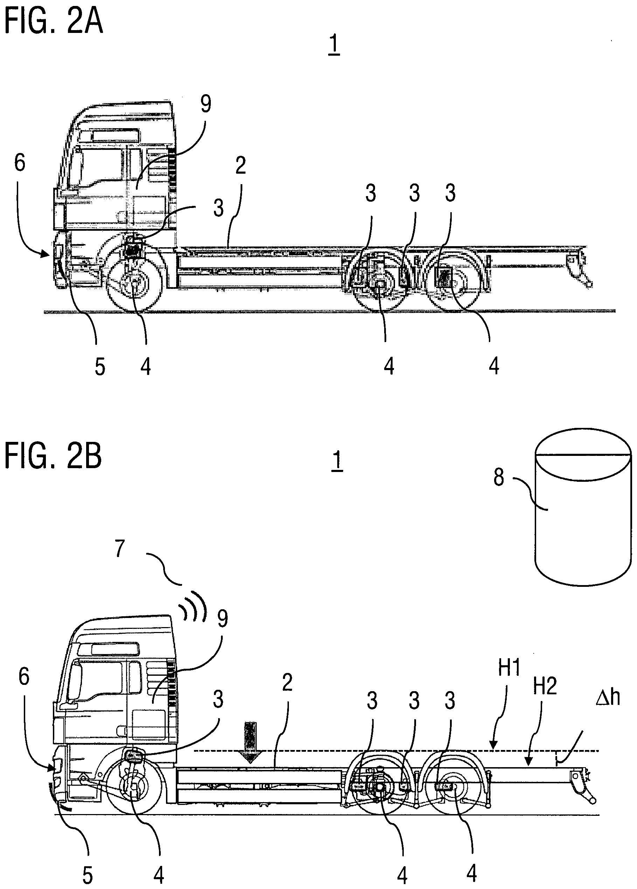

Die Figuren 2A und 2B zeigen schematisch ein Nutzfahrzeug 1, das mit einer Vorrichtung zur Niveauregelung eines gefederten Fahrzeugaufbaus relativ zu einer Radaufhängung ausgestattet ist.

Die Räder des Nutzfahrzeugs 1 sind über jeweils wenigstens ein an den Radaufhängungen, z. B. den Achskörpern 4, angeordnetes Feder-Dämpfungselement mit dem Fahrzeugaufbau (Chassis) 2 verbunden, um hierdurch eine Federung des Fahrzeugs 1 und somit ein sicheres und komfortables Fahrverhalten zu gewährleisten. In den Figuren 2A und 2B sind die Luftfederbälge 3 des Feder-Dämpfungselements dargestellt.

Die Höhenänderung des Fahrzeugaufbaus 2 gegenüber den Rädern erfolgt dabei durch ein an sich bekanntes Regelverfahren, mit dem die Luftmenge im Luftfedersystem des Fahrzeugs geändert wird. Bei Unter- oder Überschreitung eines vorgegebenen Niveausollwerts wird durch ein Regelsystem ein Höhenänderungsvorgang eingeleitet. Dabei wird bei Unterschreitung des vorgegebenen Niveausollwerts dem Luftfedersystem regelbar ein Druckmittel zugeführt, und bei Überschreitung des vorgegebenen Niveausollwerts wird aus dem Luftfedersystem regelbar ein Druckmittel zur Absenkung des Fahrzeugaufbaus abgelassen.

Die Regelvorrichtung zur Ausführung dieses Regelverfahrens ist in den Figuren 2A und 2B nicht dargestellt. Diese Regelvorrichtung ist erfindungsgemäß ferner eingerichtet, den Niveausollwert, auf den jeweils der Abstand zwischen Fahrzeugaufbau 2 und Radaufhängung 4 eingeregelt wird, in Abhängigkeit vom aktuellen Straßentyp variabel vorzugeben, wie vorstehend in Zusammenhang mit Figur 1 beschrieben.

Gemäß dem in den Figuren 2A und 2B dargestellten Ausführungsbeispiel kann der Niveausollwert auf zwei unterschiedliche Werte eingestellt werden. Figur 2A zeigt das Nutzfahrzeug 1 in einem Zustand, bei dem der Niveausollwert auf den höheren Wert H1 eingestellt wurde, während Figur 2B das Nutzfahrzeug 1 ohne Sattelauflieger und in einem Zustand zeigt, bei dem der Niveausollwert auf den niedrigen Wert H2 eingestellt wurde.

In Figur 2B gibt Δh die Differenz H1-H2 der beiden Niveausollwerte H1, H2 an und damit den Betrag, um den die Bodenfreiheit des Nutzfahrzeugs 1 abnimmt, wenn der Niveausollwert vom Wert H1 auf den Wert H2 abgesenkt wird.

Im Bodenbereich an der Frontseite 6 des Fahrerhauses 9 des Nutzfahrzeugs 1 ist ein schwenkbares aerodynamisches Flächenelement 5 angeordnet, das im ausgefahrenen Zustand Luftverwirbelungen an der Fahrzeugunterseite reduziert. Immer dann, wenn der Niveausollwert auf den niedrigen Wert H2 herabgesetzt wird, wird ebenfalls das aerodynamische Flächenelement 5 automatisch ausgefahren, wodurch sich ein zusätzlicher Kraftstoffeinspareffekt ergibt. Wird der Niveausollwert wieder auf den Wert H1 zurückgesetzt, wird das aerodynamische Flächenelement 5 ebenfalls wieder eingefahren.

Im Fahrerhaus 9 befindet sich ferner eine manuelle Betätigungseinrichtung (nicht dargestellt), z. B. in Form eines Schalters, mit der der Fahrer den Niveausollwert manuell auf den Wert H1 oder H2 einstellen kann, wie vorstehend bereits beschrieben.

In Figur 2B ist ferner stark schematisiert dargestellt, dass die Vorrichtung zur Niveauregelung optional über eine drahtlose Datenkommunikationsschnittstelle 7 auf eine fahrzeugexterne Datenbank zugreifen kann, um die vom Fahrer manuell getätigten Niveausollwerteinstellungen zusammen mit den entsprechenden Positionsdaten in einem vorbestimmten Datenformat an eine fahrzeugexterne Datenbank 8 zu übertragen und/oder um von dieser externen Datenbank 8 entsprechende, von anderen Fahrern manuell getätigte Niveausollwerteinstellungen mit den entsprechenden Positionsdaten abzufragen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Nutzfahrzeug
- 2: Fahrzeugaufbau
- 3: Luftfederbalg
- 4: Radaufhängung
- 5: Aerodynamisches Flächenelement
- 6: Frontseite Fahrerhaus
- 7: Drahtlos-Datenverbindung
- 8: Fahrzeugexterne Datenbank
- H1: Erster Niveausollwert
- H2: Zweiter Niveausollwert

## Patentansprüche

1. Verfahren zur Niveauregelung eines gefederten Fahrzeugaufbaus (2) relativ zu einer Radaufhängung (4), bei dem Abstandswerte zwischen dem Fahrzeugaufbau (2) und der Radaufhängung (4) ermittelt und durch Ansteuerung von einem Federsystem (3) auf einen variabel vorgebbaren Niveausollwert (H1, H2) eingeregelt werden, wobei in Abhängigkeit von einer Fahrzeugposition und von Straßenkartendaten ein aktueller Straßentyp ermittelt (S4) und der Niveausollwert in Abhängigkeit von dem ermittelten Straßentyp festgelegt wird (S5, S6); **gekennzeichnet durch** das Ausfahren eines im Bodenbereich an der Frontseite (6) des Kraftfahrzeugs angeordneten aerodynamischen Flächenelements (5) zur Reduzierung von Luftverwirbelungen an der Fahrzeugunterseite, wenn der Niveausollwert herabgesetzt wird.

2. Verfahren nach Anspruch 1, **dadurch gekennzeichnet, dass** der Niveausollwert (H2) herabgesetzt wird, wenn der aktuelle Straßentyp als eine Autobahn, eine Fernstraße und/oder eine Überlandstraße ermittelt wurde.

3. Verfahren nach Anspruch 1 oder 2, **gekennzeichnet durch** das Bereitstellen einer manuellen Eingabemöglichkeit, über die ein Fahrzeugfahrer den Niveausollwert manuell einstellen kann, wodurch der in Abhängigkeit von dem ermittelten Straßentyp automatisch festgesetzte Niveausollwert außer Kraft gesetzt wird.

4. Verfahren nach Anspruch 3, **gekennzeichnet durch**
(a) das Speichern der manuellen Niveausollwerteinstellungen des Fahrers zusammen mit den entsprechenden Positionsdaten der Fahrzeugposition, an der die manuellen Niveausollwerteinstellungen getätigt wurden; und
(b) ein Festlegen des Niveausollwerts in Abhängigkeit von den gespeicherten Niveausollwerteinstellungen des Fahrers, wobei durch einen Vergleich einer aktuellen Fahrzeugposition mit den für die manuellen Niveausollwerteinstellungen gespeicherten Positionsdaten ermittelt wird, ob für die aktuelle Fahrzeugposition und/oder Straße gespeicherte manuelle Niveausollwerteinstellungen vorliegen (S2), und falls ja, der Niveausollwert gemäß der entsprechenden gespeicherten manuellen Niveausollwerteinstellung festgelegt (S3) wird.

5. Verfahren nach Anspruch 3 oder 4, **dadurch gekennzeichnet, dass** die manuellen Niveausollwerteinstellungen und die entsprechenden Positionsdaten an eine fahrzeugexterne Datenbank (8), vorzugsweise eine Internetdatenbank, übermittelt werden.

6. Verfahren nach einem der Ansprüche 3 bis 5, **dadurch gekennzeichnet,**
(a) **dass** von einer fahrzeugexternen Datenbank (8) Daten bereitgestellt und vom Kraftfahrzeug im Fahrbetrieb empfangen werden, die von anderen Fahrern auf einer bestimmten Straße oder an einer bestimmte Position getätigte manuelle Niveausollwerteinstellungen angeben; und
(b) **dass**, falls für eine aktuelle Fahrposition keine eigene gespeicherte manuelle Niveausollwerteinstellung vorliegt und falls aus den von der fahrzeugexternen Datenbank (8) empfangenen Daten ableitbar ist, dass ein anderer Fahrer an der aktuellen Fahrposition eine manuelle Niveausollwerteinstellung getätigt hat, der Niveausollwert gemäß der empfangenen Niveausollwerteinstellung für die aktuelle Fahrposition. festgelegt wird.

7. Vorrichtung zur Niveauregelung eines gefederten Fahrzeugaufbaus relativ zu einer Radaufhängung, die ausgeführt ist, Abstandswerte zwischen dem Fahrzeugaufbau (2) und der Radaufhängung (4) zu ermitteln und durch Ansteuerung von einem Federsystem (3) auf einen variabel vorgebbaren Niveausollwert (H1, H2) einzuregeln, wobei die Vorrichtung ausgeführt ist, in Abhängigkeit von einer Fahrzeugposition und Straßenkartendaten einen aktuellen Straßentyp zu ermitteln (S5) und den Niveausollwert in Abhängigkeit von dem ermittelten Straßentyp festzulegen (S5, S6), **dadurch gekennzeichnet, dass** ein im Bodenbereich an der Frontseite (6) des Kraftfahrzeugs angeordnetes aerodynamisches Flächenelement (5) ausgefahren wird, zur Reduzierung von Luftverwirbelungen an der Fahrzeugunterseite, wenn der Niveausollwert herabgesetzt wird.

8. Kraftfahrzeug, insbesondere Nutzfahrzeug (1), mit einer Vorrichtung nach Anspruch 7.

## Claims

1. A method for level control of a sprung vehicle structure (2) relative to a wheel suspension (4), with which distance values between the vehicle structure (2) and the wheel suspension (4) are determined and are controlled to a variably predeterminable target level value (H1, H2) by activating a spring system (3), **wherein** a current type of road is determined (S4) depending on a vehicle position and on map data and the target level value is set (S5, S6) depending on the type of road that was determined; **characterized by** the deployment of an aerodynamic surface element (5) that is disposed in the bottom region at the front (6) of the motor vehicle for the reduction of air turbulence at the underside of the vehicle if the target level value is reduced.

2. The method according to Claim 1, **characterized in that** the target level value (H2) is reduced if the current type of road has been determined as a motorway, a trunk road and/or a national road.

3. The method according to Claim 1 or 2, **characterized by** the provision of a manual input facility, by means of which a driver of the vehicle can set the target level value manually, whereby the target level value that was automatically set depending on the type of road that was determined is disabled.

4. The method according to Claim 3, **characterized by**
(a) storing the manual target level value settings of the driver together with the corresponding position data of the vehicle position at which the manual target level value settings were made; and
(b) setting the target level value depending on the stored target level value settings of the driver, wherein by comparing a current vehicle position with the stored position data for the manual target level value settings it is determined whether there are stored manual target level value settings for the current vehicle position and/or road (S2), and if so the target level value is set (S3) according to the corresponding stored manual target level value setting.

5. The method according to Claim 3 or 4, **characterized in that** the manual target level value settings and the corresponding position data are transmitted to a database external to the vehicle (8), preferably an Internet database.

6. The method according to any one of Claims 3 to 5, **characterized in that**
(a) data that specify target level value settings that have been made manually by other drivers on a certain road or at a certain position are provided from a database external to the vehicle (8) and are received by the motor vehicle while travelling; and
(b) if there is no stored manual target level value setting for a current driving position and if it can be determined from the data received from the database external to the vehicle (8) that another driver has made a manual target level value setting at the current driving position, the target level value is set according to the received target level value setting for the current driving position.

7. An apparatus for level control of a sprung vehicle structure relative to a wheel suspension, which is implemented to determine distance values between the vehicle structure (2) and the wheel suspension (4) and to control the distance values to a variably predeterminable target level value (H1, H2) by activating a spring system (3), **wherein** the apparatus is implemented to determine a current type of road (S5) depending on a vehicle position and map data and to set (S5, S6) the target level value depending on the type of road that was determined, **characterized in that** an aerodynamic surface element (5) that is disposed in the bottom region at the front (6) of the motor vehicle is deployed for the reduction of air turbulence at the underside of the vehicle if the target level value is reduced.

8. A motor vehicle, in particular commercial vehicle (1), with an apparatus according to Claim 7.

## Revendications

1. Procédé de régulation du niveau d'une carrosserie de véhicule (2) montée sur suspension par rapport à une suspension de roues (4), avec lequel des valeurs d'écart entre la carrosserie de véhicule (2) et la suspension de roues (4) sont déterminées et, par commande par un système de ressort (3), asservies à une valeur de consigne de niveau (H1, H2) variable pouvant être prédéfinie, un type de route actuel étant déterminé (S4) en fonction d'une position de véhicule et de données de carte routière et la valeur de consigne de niveau étant fixée (S5, S6) en fonction du type de route déterminé; **caractérisé par** la sortie d'un élément de surface aérodynamique (5) disposé dans la zone du plancher au niveau du côté frontal (6) du véhicule automobile en vue de réduire les tourbillons d'air au niveau du côté inférieur du véhicule lorsque la valeur de consigne du niveau est abaissée.

2. Procédé selon la revendication 1, **caractérisé en ce que** la valeur de consigne du niveau (H2) est abaissée lorsque le type de route actuel a été déterminé être une autoroute, une route nationale et/ou une route départementale.

3. Procédé selon la revendication 1 ou 2, **caractérisé par** la fourniture d'une possibilité de saisie manuelle, par le biais de laquelle un conducteur de véhicule peut régler manuellement la valeur de consigne du niveau, ce par quoi la valeur de consigne du niveau fixée automatiquement en fonction du type de route déterminée est invalidée.

4. Procédé selon la revendication 3, **caractérisé par**
(a) l'enregistrement des réglages manuels de la valeur de consigne du niveau du conducteur conjointement avec des données de position correspondantes de la position du véhicule, au niveau de laquelle les réglages manuels de la valeur de consigne du niveau ont été réalisés ; et
(b) une fixation de la valeur de consigne du niveau en fonction des réglages enregistrés de la valeur de consigne du niveau du conducteur, une comparaison entre une position actuelle du véhicule et les données de position enregistrées pour les réglages manuels de la valeur de consigne du niveau étant effectuée afin de déterminer s'il existe (S2) des réglages manuels de la valeur de consigne du niveau enregistrés pour la position du véhicule et/ou la route actuelle(s), et dans l'affirmative, la valeur de consigne du niveau est fixée (S3) conformément au réglage manuel de la valeur de consigne du niveau enregistré correspondant.

5. Procédé selon la revendication 3 ou 4, **caractérisé en ce que** les réglages manuels de la valeur de consigne du niveau et les données de position correspondantes sont communiqués à une base de données (8) externe au véhicule, de préférence une base de données sur Internet.

6. Procédé selon l'une des revendications 3 à 5, **caractérisé en ce**
(a) **que** des données sont fournies par une base de données (8) externe au véhicule et sont reçues par le véhicule automobile en régime de déplacement, lesquelles indiquent des réglages manuels de la valeur de consigne du niveau réalisés par d'autres conducteurs sur une route définie ou à une position définie ; et
(b) **que** dans le cas où il n'existe aucun réglage manuel propre de la valeur de consigne du niveau enregistré pour une position de déplacement actuelle et dans le cas où les données reçues par la base de données (8) externe au véhicule permettent de déduire qu'un autre conducteur a réalisé un réglage manuel de la valeur de consigne du niveau à la position de déplacement actuelle, la valeur de consigne du niveau est fixée conformément au réglage de la valeur de consigne du niveau reçu pour la position de déplacement actuelle.

7. Dispositif de régulation du niveau d'une carrosserie de véhicule montée sur suspension par rapport à une suspension de roues, lequel est conçu pour déterminer des valeurs d'écart entre la carrosserie de véhicule (2) et la suspension de roues (4) et, par commande par un système de ressort (3), les asservir à une valeur de consigne de niveau (H1, H2) variable pouvant être prédéfinie, le dispositif étant conçu pour déterminer (S5) un type de route actuel en fonction d'une position de véhicule et de données de carte routière et fixer (S5, S6) la valeur de consigne de niveau en fonction du type de route déterminé; **caractérisé en ce qu'**un élément de surface aérodynamique (5) disposé dans la zone du plancher au niveau du côté frontal (6) du véhicule automobile est sorti en vue de réduire les tourbillons d'air au niveau du côté inférieur du véhicule lorsque la valeur de consigne du niveau est abaissée.

8. Véhicule automobile, notamment véhicule utilitaire (1), comprenant un dispositif selon la revendication 7.
